# EUROPEAN PATENT APPLICATION

(11) **EP 4 704 431 A1**
(43) Date of publication of application: **04.03.2026**
(21) Application number: 24796130.3
(22) Date of filing: 24.04.2024
(51) Int. Cl.: H04N 21/431, H04N 21/472, H04N 21/485

(54) **MEDIA CONTENT POSTING METHOD AND APPARATUS, AND DEVICE AND STORAGE MEDIUM**

(30) Priority: 26.04.2023 CN 202310464604
(71) Applicant: Beijing Zitiao Network Technology Co., Ltd., Beijing 100190 (CN)
(72) Inventor: ZHAO, Jiayi, Beijing 100028 (CN); SUN, Hui, Beijing 100028 (CN); SONG, Qing, Beijing 100028 (CN); HUANG, Lei, Beijing 100028 (CN)
(74) Representative: Marks & Clerk LLP
(86) International application number: PCT/CN2024/089633
(87) International publication number: WO 2024/222754

(57) **Abstract**

Disclosed in embodiments of the disclosure are a method and apparatus for posting a media content, a device and a storage medium, which relate to the technical field of computers. The method includes: obtaining, in response to a shooting operation for a media content obtaining interface, a target image shot in a target shooting mode, where the target image includes a cover image and a recorded video between a first moment before a trigger moment of the shooting operation and a second moment after the trigger moment; determining target audio corresponding to the target image; generating a target media content according to the target image and the target audio; and posting, in response to a posting operation of the target media content, the target media content as a media work in an application.

## Description

### CROSS-REFERENCE TO RELATED APPLICATION(S)

The present application claims the priority to Chinese Patent Application No. 202310464604.0, filed on April 26, 2023 and entitled "Method and apparatus, device and storage medium for posting media content", which is incorporated in its entirety herein by reference.

### FIELD

Examples of the disclosure relate to the technical field of computers, and in particular to a method and apparatus, a device and a storage medium for posting a media content.

### BACKGROUND

Owing to ceaseless development of Internet technology, users can browse a variety of multimedia contents on the Internet, and different users can share their works with each other by posting the media contents such as videos or pictures.

### SUMMARY

A method and apparatus, a storage medium and a device for posting a media content are provided in examples of the disclosure, which can optimize an existing media content posting solution.

In a first aspect, a method for posting a media content is provided in an example of the disclosure. In an application, the method includes:
obtaining, in response to a shooting operation for a media content obtaining interface, a target image shot in a target shooting mode, where the target image includes a cover image and a recorded video between a first moment before a trigger moment of the shooting operation and a second moment after the trigger moment;
determining target audio corresponding to the target image;
generating a target media content according to the target image and the target audio; and
posting, in response to a posting operation of the target media content, the target media content as a media work in the application.

In a second aspect, an apparatus for posting a media content is further provided in an example of the disclosure. In an application, the apparatus includes:
a target image obtaining module, configured to obtain, in response to a shooting operation for a media content obtaining interface, a target image shot in a target shooting mode, wherein the target image includes a cover image and a recorded video between a first moment before a trigger moment of the shooting operation and a second moment after the trigger moment;
an audio determination module, configured to determine target audio corresponding to the target image;
a media content generation module, configured to generate a target media content according to the target image and the target audio; and
a media content posting module, configured to post, in response to a posting operation of the target media content, the target media content as a media work in the application.

In a third aspect, an electronic device is further provided in an example of the disclosure. The electronic device includes:
one or more processors; and
a storage apparatus, configured to store one or more programs, where
the one or more processors perform the method for posting a media content according to the example of the disclosure when the one or more programs are executed by the one or more processors.

In a fourth aspect, a storage medium including a computer-executable instruction is further provided in an example of the disclosure. The computer-executable instruction is configured to execute the method for posting a media content according to the example of the disclosure when executed by a computer processor.

According to the media content posting solution according to the example of the disclosure, the target image shot in the target shooting mode is obtained in response to the shooting operation for the media content obtaining interface, where the target image includes the cover image and the recorded video between the first moment before the trigger moment of the shooting operation and the second moment after the trigger moment; the target audio corresponding to the target image is determined; the target media content is generated according to the target image and the target audio; and in response to the posting operation of the target media content, the target media content is posted as the media work in the application.

### BRIEF DESCRIPTION OF THE DRAWINGS

The above and other features, advantages and aspects of each example of the disclosure will become more apparent in combination with the accompanying drawings and with reference to the following particular embodiments. Throughout the accompanying drawings, the same or similar reference numerals denote the same or similar elements. It should be understood that the accompanying drawings are schematic, and components and elements are not necessarily drawn to the actual scale.
FIG. 1 is a schematic flow diagram of a method for posting a media content according to an example of the disclosure;
FIG. 2 is a schematic diagram showing a recorded video generation process according to an example of the disclosure;
FIG. 3 is a schematic flow diagram of a method for posting a media content according to an example of the disclosure;
FIG. 4 is a schematic diagram showing interface interaction according to an example of the disclosure;
FIG. 5 is a schematic structural diagram of an apparatus for posting a media content according to an example of the disclosure; and
FIG. 6 is a schematic structural diagram of an electronic device according to an example of the disclosure.

### DETAILED DESCRIPTION OF EMBODIMENTS

The examples of the disclosure will be described in more detail below with reference to the accompanying drawings. Although some examples of the disclosure are shown in the accompanying drawings, it should be understood that the disclosure can be implemented in various forms and should not be construed to be limited to the examples described herein. On the contrary, these examples are provided for more thorough and complete understanding of the disclosure. It should be understood that the accompanying drawings and examples of the disclosure are merely for illustrative purposes and are not intended to limit the scope of protection of the disclosure.

It should be understood that various steps described in the method embodiments of the disclosure can be executed in different orders and/or in parallel. In addition, the method embodiment may include additional steps and/or steps shown to omit execution. The scope of the disclosure is not limited in this regard.

The terms "comprise" and "include" and their variations used herein are open-ended, meaning "comprise, but not limited to" and "include, but not limited to". The term "based on" is "at least partially based on". The term "an example" denotes "at least an example"; the term "another example" denotes "at least one another example"; and the term "some examples" denotes "at least some examples". Related definitions of other terms will be provided in the following description.

It should be noted that the concepts such as "first" and "second" mentioned in the disclosure are merely intended to distinguish different apparatuses, modules or units, and are not intended to define the order or interdependence of the functions executed by these apparatuses, modules or units.

It should be noted that the modification of "a", "an", "the" and "plurality" mentioned in the disclosure is illustrative rather than limiting, and those skilled in the art should understand that "one or more" should be understood unless explicitly stated otherwise in the context.

The names of messages or information exchanged between a plurality of apparatuses in the embodiments of the disclosure are merely for illustrative purposes, and are not intended to limit the scope of these messages or information.

It can be understood that before the technical solution disclosed in each example of the disclosure is used, a user should be informed of the type, use scope, use scene, etc. of personal information involved in the disclosure in an appropriate mode according to relevant laws and regulations, and authorization from the user should be obtained.

For example, in response to reception of an active request of the user, prompt information is sent to the user to explicitly prompt the user that an operation requested to be executed by the user requires obtaining and use of the personal information of the user. Thus, the user may autonomously select whether to provide the personal information to software or hardware, such as an electronic device, an application, a server or a storage medium, which execute operations of the technical solution of the disclosure according to the prompt information.

As an optional but non-limiting implementation, in response to reception of the active request of the user, a mode of sending the prompt information to the user may be, for example, a mode of a pop-up window, and the prompt information may be presented in a text mode in the pop-up window. In addition, the pop-up window may further carry a selection control for the user to select "agree" or "disagree" to provide the personal information to the electronic device.

It can be understood that the above processes of notification and user authorization obtaining are merely illustrative, and do not constitute limitations to the implementation of the disclosure, and other modes satisfying relevant laws and regulations may also be applied to the implementation of the disclosure.

It can be understood that data (including, but not limited to, data itself, and data obtaining or use) involved in the technical solution should comply with the requirements of corresponding laws, regulations and relevant provisions.

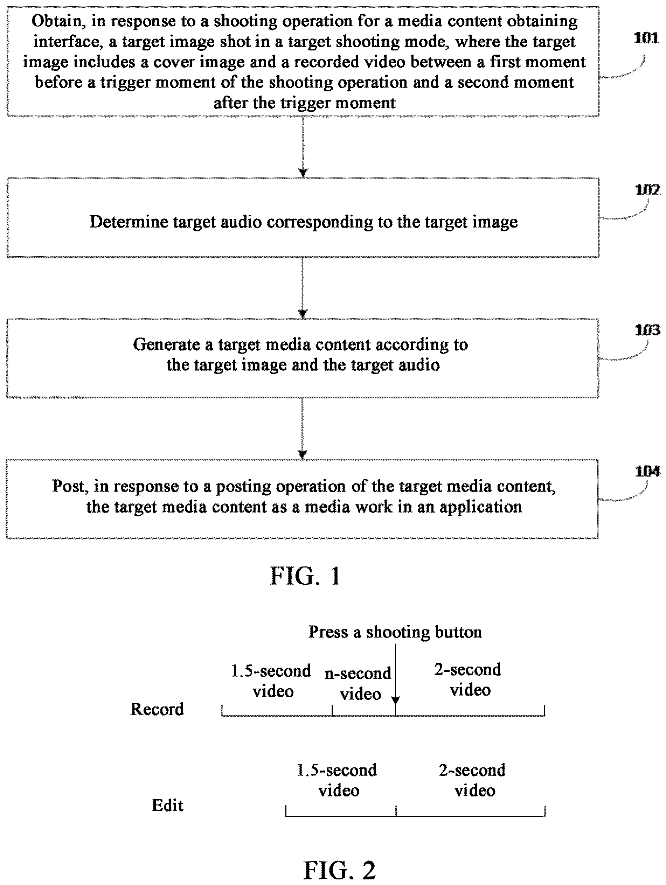

FIG. 1 is a schematic flow diagram of a method for posting a media content according to an example of the disclosure. The example of the disclosure is applicable to a case in which the media content is posted. The method may be executed by an apparatus for posting a media content. The apparatus may be implemented in a form of software and/or hardware. Optionally, the apparatus may be implemented by means of an electronic device. The electronic device may be a mobile terminal such as a mobile phone, a smartwatch, a tablet and a personal digital assistant, a personal computer (PC) terminal or a server.

As shown in FIG. 1, the method includes:
step 101, a target image shot in a target shooting mode is obtained in response to a shooting operation for a media content obtaining interface, wherein the target image includes a cover image and a recorded video between a first moment before a trigger moment of the shooting operation and a second moment after the trigger moment.

For example, the target shooting mode may be added into an application. The application has a media work posting function, and a specific type of the application is not limited. In the target shooting mode, a user is supported to shoot the target image. For example, a switch control corresponding to the target shooting mode is added into the media content obtaining interface in the application. The user may select to activate or deactivate the target shooting mode by triggering the switch control. After the user triggers the switch control, prompt information such as text may prompt that the target shooting mode is currently in an activated or deactivated state. The media content obtaining interface may be an interface for obtaining the media content in the application, and the user may input the shooting operation corresponding to the target shooting mode for the media content obtaining interface.

Illustratively, the target image includes the recorded video and the cover image. The shooting operation may be understood as an operation for triggering shooting of the target image in the target shooting mode, and a specific triggering mode of the shooting operation is not limited, and may be, for example, clicking of a shooting control, inputting of a gesture for triggering the shooting operation, or completion of an action for triggering the shooting operation. In the target shooting mode, video data may be recorded in real time and cached, video continues to be recorded after the shooting operation is triggered, and the recorded video is determined according to the video data between the first moment before the trigger moment of the shooting operation and the second moment after the trigger moment. Duration between the first moment and the trigger moment may be denoted as first duration, and duration between the second moment and the trigger moment may be denoted as second duration. Optionally, at least one of the first duration and the second duration is not zero. The first duration and/or the second duration may be set by the application. The first duration and/or the second duration may be determined according to a setting of the user. Thus, shooting duration of the target image can be more flexible, thereby satisfying a personalized shooting requirement of the user better. Thus, the media work satisfying a personalized creation requirement of the user can be generated. Illustratively, the first duration may be 1.5 seconds, and the second duration may be 2 seconds. The user may adjust duration according to a requirement of the user. Optionally, the shooting operation only acts on the trigger moment. A clicking operation of clicking the shooting control is taken as an example. An action moment of the shooting operation may be a moment when a touch object (such as a finger of the user) presses down a touch screen. The cover image may be any video frame in the recorded video, or may be an image separately collected by the electronic device, for example, may be a shot image collected at the trigger moment of the shooting operation, or may be a shot image collected at the second moment, which is not specifically limited. Optionally, the cover image may be determined according to the setting of the user. For example, the user may set a collection moment of the cover image. For another example, the user may select a video frame from the recorded video as the cover image.

Optionally, the target shooting mode and a preset shooting mode may be simultaneously in an activated state. The preset shooting mode may include, for example, a dual shooting mode (for example, shooting is synchronously carried out by a front-facing camera and a rear-facing camera of the electronic device), a countdown shooting mode, and a variable-speed shooting mode. If the target shooting mode and the preset shooting mode are simultaneously in the activated state, for example, for the dual shooting mode, recorded videos collected by the front-facing camera and the rear-facing camera respectively may be synthesized into the same recorded video, and cover images captured by the front-facing camera and the rear-facing camera respectively may be synthesized into the same cover image. A synthesis method may be, for example, upper and lower equal divisions or large and small windows, which is not specifically limited. For the countdown shooting mode, the trigger moment of the shooting operation may be understood as a moment at which countdown ends. The variable-speed shooting mode may include a fast shooting mode and a slow shooting mode. For the variable-speed shooting mode, a speed of normal video recording is multiplied by a corresponding variable-speed coefficient (for example, the variable-speed coefficient of the fast shooting mode is greater than 1, and the variable-speed coefficient of the slow shooting mode is less than 1) to obtain the recorded video in the target image subjected to speed change processing.

Step 102, a target audio corresponding to the target image is determined.

Illustratively, the target audio may be specified by the application, or may be freely set by the user. The target audio may include various forms of audio such as a soundtrack or a voice, which is not specifically limited. Optionally, the user may select the target audio in the media content obtaining interface, or may select the target audio in a preset editing interface of the target image. Before the target media content is posted, the user may reselect or edit the target audio. It may be understood that the user may adjust the target audio and/or the target image in the preset editing interface. For example, the user may adjust a frame size of the target image, and cuts the duration to obtain the target media content. Optionally, the target audio includes a target soundtrack, and the media content obtaining interface includes a soundtrack selection control. The soundtrack selection control is configured to select the target soundtrack. Optionally, if the target audio is selected in the media content obtaining interface, the target audio may be played in a process of displaying the media content obtaining interface, such that the user may preview an effect of the media content to some extent. The recorded video may not include sound of the target audio. For example, the sound of the target audio is removed from the recorded video data. Optionally, the user may select whether to add the soundtrack or a user soundtrack into the media content.

Step 103, a target media content is generated according to the target image and the target audio.

Illustratively, after the target image is obtained and the target audio is determined, the target image and the target audio may be synthesized to obtain the target media content. When the target media content is generated, the audio included in the recorded video may be retained or filtered, which is not specifically limited.

Step 104, the target media content is posted as a media work in the application in response to a posting operation of the target media content.

Illustratively, after the posting operation input by the user for the target media content is received, the target media content is posted as the media work in the application. It should be noted that the posting operation of the target media content may be input before, during, or after generating the target media content, and a specific timing of the posting operation is not limited. For example, a preset posting mode may exist in the application. After the user inputs the posting operation corresponding to the preset posting mode, the target media content is generated and posted. That is, the target media content is automatically posted after the target media content is generated.

According to the method for posting a media content according to the example of the disclosure, the target image shot in the target shooting mode is obtained in response to the shooting operation for the media content obtaining interface, and the target image includes the cover image and the recorded video between the first moment before the trigger moment of the shooting operation and the second moment after the trigger moment; the target audio corresponding to the target image is determined; the target media content is generated according to the target image and the target audio; and in response to the posting operation of the target media content, the target media content is posted as the media work in the application. By using the above technical solution, the media content for publication can be generated according to the target image and the target audio and posted. Thus, a creation approach of the media content and a content form in the media work are enriched, media work based interaction between users is enhanced, and user experience is improved.

In some embodiments, the step that a target media content is generated according to the target image and the target audio includes: the target image and the target audio are displayed in a preset editing interface based on a preset display pattern, and according to the preset display pattern, the target media content is generated according to the target image and the target audio. Thus, the target image and the target audio can be cooperatively displayed in the preset editing interface based on the preset display pattern, and the target media content corresponding to the preset display pattern can be generated. The user may achieve the effect of previewing the media content in the preset editing interface.

Optionally, the preset display pattern may be determined by display modes, and different display modes correspond to different media types of the target media content. The media types may include a video, a picture or a picture having audio. In some embodiments, the method further includes: a current display mode is determined in response to a display mode switching operation input based on the preset editing interface, wherein the display mode is configured to determine the preset display pattern, and different display modes correspond to different media types of the target media content. Thus, the user may select the media type of the target media content corresponding to the selected display mode by switching the display mode.

In some embodiments, the preset display pattern is determined according to a display mode and audio duration of the target audio, to completely display the recorded video and/or the cover image in a process of playing all or part of the target audio. Thus, complete display of the recorded video and/or the cover image can be ensured in different display modes, and various lengths of audio can be adapted, such that a picture and audio in the generated target media content are more coordinated. Further, a viewing user of the media work can more completely view the content in the target image in a process of listening to the audio, thereby improving sensual experience.

It should be noted that the user may edit the obtained target image. If editing exists, the complete display may be understood as complete display of an edited recorded video and/or cover image.

Illustratively, for example, the display mode may include at least one of a first display mode, a second display mode, and a third display mode. The first display mode is configured to display the recorded video and the cover image. The second display mode is configured to display the recorded video, may be specifically cyclical display of the recorded video, and may also be denoted as a carousel display mode. The third display mode is configured to display the cover image, and may also be denoted as a static image display mode. The target image may correspond to at least two display modes, and different display modes correspond to different preset display patterns. In the same display mode, different preset display patterns may correspondingly exist due to different audio durations of the target audio. It may be understood that different display modes correspond to different media types of the target media content. For example, when the display mode is the first display mode and the second display mode, the corresponding target media content is a video type. When the display mode is the third display mode, the corresponding target media content is a picture type.

Illustratively, in the first display mode, the recorded video and the cover image may be completely displayed once. For example, the recorded video is played, and then the cover image is displayed after playing is completed. Display duration of the cover image may be preset or dynamically adjusted according to the audio duration of the target audio. For example, video duration of the recorded video is 3.5 seconds, the display duration of the cover image is preset to 2 seconds (which is denoted as first preset duration), and the sum of the video duration and the display duration, 5.5 seconds, is denoted as target image duration. That is, the target image duration includes the sum of the video duration of the recorded video and the first preset duration.

In some embodiments, the step that the target image and the target audio are displayed in a preset editing interface based on a preset display pattern may include: the recorded video in the preset editing interface is completely played, and then the target audio is completely played and then muted, or the target audio is looped in a process of displaying the cover image for first preset duration under the condition that the audio duration is less than target image duration in the first display mode. Thus, the situation that the recorded video cannot be completely played due to excessively short audio duration, or the user is unable to obtain valid information in the cover image in real time due to excessively short display time of the cover image can be avoided. For example, as described above, the target image duration is 5.5 seconds. If the audio duration is 3 seconds, the target audio is not played or looped within last 0.5 seconds of the recorded video and 2 seconds corresponding to the cover image. If sound exists in the recorded video, the target audio may be played normally. If the audio duration is 4 seconds, the target audio is not played or played anew in last 1.5 seconds corresponding to the cover image.

In some embodiments, the step that the target image and the target audio are displayed in a preset editing interface based on a preset display pattern may include: the recorded video is completely played and then the cover image continues to be displayed until the target audio is played in a process of playing the target audio in the preset editing interface under the condition that the audio duration is greater than the target image duration in the first display mode. Thus, an audio listening requirement of the user is considered under the condition of ensuring that the recorded video and the cover image can be completely displayed. For example, as described above, the target image duration is 5.5 seconds. If the audio duration is 7 seconds, the display duration of the cover image may be extended from 2 seconds to 3.5 seconds.

In some embodiments, the step that the target image and the target audio are displayed in a preset editing interface based on a preset display pattern includes: the target audio is completely played and then muted, or the target audio is looped anew in a process of playing the recorded video in each round in the preset editing interface under the condition that the audio duration is less than video duration of the recorded video in the second display mode. Thus, the situation that the recorded video cannot be completely played in a single round of playing due to excessively short audio duration can be avoided. For example, as described above, the video duration is 3.5 seconds. If the audio duration is 3 seconds, the target audio is not being played or looped anew in last 0.5 seconds of the recorded video. If sound exists in the recorded video, the target video may be normally played.

In some embodiments, the step that the target image and the target audio are displayed in a preset editing interface based on a preset display pattern includes: the recorded video is completely played for the target number of rounds in a process of playing the target audio of target duration in the preset editing interface under the condition that the audio duration is greater than the video duration of the recorded video in the second display mode, wherein the target number of rounds is determined according to a rounded quotient of the audio duration and the video duration, and the target duration is determined according to a product of the video duration and the target number of rounds. Thus, the situation that the recorded video cannot be completely played in a single round of playing near an end of the soundtrack can be avoided. For example, as described above, the video duration is 3.5 seconds. If the audio duration is 18 seconds, a quotient after 18 seconds/3.5 seconds is rounded to 5. That is, the target number of rounds is 5 rounds, such that the target duration may be a product of 5 rounds and 3.5, 17.5 seconds. The target audio may be played for 17.5 seconds, and is not played at last 0.5 seconds. Optionally, if the target audio is played once, the target audio may be played again from a beginning, and the recorded video may continue to be completely played for the target number of rounds in a playing process.

In some embodiments, the step that the target image and the target audio are displayed in a preset editing interface based on a preset display pattern includes: the cover image is displayed in a process of completely playing the target audio in the preset editing interface in the third display mode. Thus, a complete listening requirement of the user for the soundtrack is considered under the condition of ensuring complete display of the cover image. For example, the audio duration is 3 seconds, such that the cover image is displayed for 3 seconds.

Optionally, the user may edit the target image and/or the target audio in the preset editing interface, and a specific editing mode of the target image and/or the target audio is not limited. For example, a picture in the target image is rotated, zoomed or cut, the recorded video is edited, and a volume of the target audio is adjusted or edited.

In some embodiments, the method further includes: creation material set by a user is determined; and the step that the target media content is generated according to the target image and the target audio includes: the target media content is generated according to the target image, the target audio and the creation material. Thus, more free creation space can be provided for the user, an amount of information in the media work is improved, and media work based interaction between users can be further enhanced.

Illustratively, the creation material may include stickers, effects, beauty and filter, for example.

In some embodiments, the step that creation material set by a user is determined includes: the creation material set by the user is determined in response to a creation material setting operation input by the user based on the media content obtaining interface of the target image and/or based on a preset editing interface. Thus, the user can freely add the creation material before and/or after the target image is obtained, thereby further improving a degree of creative freedom of the user.

If the user adds the creation material, the creation material may also be displayed in a process of displaying the target image and the target audio in the preset editing interface based on the preset display pattern, and display duration of the creation material may be consistent with display duration of the target image. Optionally, the method may further include: an association period between the creation material set by the user and the target image is determined, wherein the association period is configured to indicate time at which the creation material appears in the target image. Thus, the user can set the association period of the creation material and the target image, and the creation material can be displayed in the association period in a process of displaying the target image. The association period may be a period on a timeline corresponding to the target image. For example, the association period is from a second to a third second, such that the creation material is displayed from the second to the third second after the target image enables to be displayed, and display of the creation material is stopped after the third second.

Optionally, the user may be supported to perform a pre-editing operation in the media content obtaining interface. The pre-editing operation may include lens flip, beautification parameter editing, filter editing and effect editing, for example. After the user inputs the pre-editing operation, cached video data may be cleared, and caching of the video data may be restarted.

In some embodiments, after the step that the target media content is generated according to the target image and the target audio, the method includes: the target media content is displayed in a target interface based on a first preset display pattern; and switching is performed from displaying the target media content based on the first preset display pattern to displaying the target media content based on a second preset display pattern in the target interface in response to a display pattern switching operation. Thus, different preset display patterns can be switched, and it is convenient for the user to view the target media content in the target interface in different ways.

Illustratively, the target interface may include the preset editing interface, a first display interface of the target media content before publication, and a second display interface of the target media content after publication. The preset display pattern may correspond to the display mode under the condition that the audio duration of the target audio has been determined, and the display pattern switching operation may be specifically the display mode switching operation. For example, the first preset display pattern corresponds to the first display mode, and the second preset display pattern may correspond to the second display mode. Different preset display patterns are switched by inputting the display mode switching operation.

In some embodiments, the method further includes: a device type of a local device is determined in response to a saving operation for a posted target media content; and the posted target media content is saved as at least one of the target image, the recorded video and the cover image according to the device type. Thus, different device types can be supported to save the target media content in different saving ways, thereby improving compatibility with the device type. For example, if the device type of the local device supports a target image format, the target media content may be saved as the target image. If the device type of the local device does not support the target image format, the target media content may be saved separately as the recorded video and/or as the cover image.

In some embodiments, in a process of obtaining a target image shot in a target shooting mode, the method further includes: in response to a preset posting operation of a user, the media work in the application is generated according to the cover image for posting under the condition of determining that the recorded video is not successfully obtained. Thus, since it typically takes a certain amount of time to obtain the recorded video, if the user triggers the posting operation of the media work in short time, the media content to be posted as the media work can be quickly generated according to the cover image and posted in order to reduce waiting time of the user and improve posting efficiency.

In some embodiments, the method further includes: in response to determining that a user enables the target shooting mode to obtain newly added cached video data, video data recorded in real time is cached, and historical cached video data satisfying a preset deletion condition is deleted; recorded video data of second preset duration continues to be recorded in response to determining that the shooting operation is triggered; and the target image is generated according to the current cached video data and the recorded video data. Thus, the historical cached video data satisfying the preset deletion condition can be deleted in time, thereby saving storage resources of the electronic device.

Optionally, the preset deletion condition may be set according to the first duration. For example, the preset deletion condition may be deleting the historical cached video data in which a time interval between shooting time and a current moment exceeds a preset interval threshold. The preset interval threshold may be an integer multiple of the first duration, such as 1 time or 2 times.

Optionally, the cached video data may be stored in an un-coded form, and denoted as un-coded video data; or the cached video data may be stored in an encoded form, and denoted as encoded video data, and may be specifically stored as an encoded file.

Optionally, the step that historical cached video data satisfying a preset deletion condition is deleted includes: the historical cached video data satisfying the preset deletion condition is deleted in a unit of a frame under the condition that the cached video data is un-coded video data; and/or the historical cached video data satisfying the preset deletion condition is deleted in a unit of an encoded file under the condition that the cached video data is encoded video data. Thus, the historical cached video data may be deleted more flexibly.

Illustratively, the un-coded video data typically has a large data amount, occupies a number of storage space, and is deleted in the unit of the frame. The above integer multiple may be 1, such that unnecessary video frames may be deleted more timely. The encoded video data is stored in the form of the encoded file, and is deleted in the unit of the encoded file, and duration corresponding to the encoded file may be the first duration. The above integer multiple may be 2. Compared with the un-coded data, the encoded file has a smaller data amount, thereby saving storage space.

Illustratively, the first duration is 1.5 seconds, the second duration (i.e. second preset duration) is 2 seconds, and encoding may be performed in the unit of 1.5 seconds. After two encoded files of 1.5 seconds are cached, a first encoded file may be deleted, and a next encoded file of 1.5 seconds continues to be recorded and encoded. FIG. 2 is a schematic diagram showing a recorded video generation process according to an example of the disclosure. Assuming that a user triggers a shooting operation (for example, presses a shooting button) at an nth second in an interval of 1.5 seconds in a recording process, an encoded file of 1.5 seconds (1.5-second video) and an encoded file of n seconds (n-seconds video) may be obtained. Then, a video of 2 seconds continues to be shot, and encoded data ranging from (1.5-n) seconds to 1.5 seconds is cut from the encoded file of 1.5 seconds during editing. The encoded data, the encoded file of n seconds and the video of 2 seconds are synthesized into a recorded video in a target image.

Optionally, if cached video data is un-coded video data, first un-coded video data of first duration may be stored into a memory of an electronic device. After a shooting operation is triggered, the first un-coded video data and second un-coded video data are encoded together into the recorded video in the target image after the second un-coded video data of second duration is obtained and stored into the memory.

Optionally, if the cached video data is the un-coded video data, third un-coded video data of the first duration may be stored into a local disk of the electronic device. After the shooting operation is triggered, the third un-coded video data is encoded into a first file, and fourth un-coded video data is encoded into a second file after the fourth un-coded video data of the second duration is obtained. The first file and the second file are synthesized into the recorded video in the target image.

Optionally, if the cached video data is the un-coded video data, fifth un-coded video data of the first duration may be stored into the local disk of the electronic device. After the shooting operation is triggered, the fifth un-coded video data and sixth un-coded video data are encoded together into the recorded video in the target image after the sixth un-coded video data of the second duration is obtained and stored into the local disk.

Optionally, if the cached video data is the un-coded video data, seventh un-coded video data of the first duration may be encoded into key frame data and then stored into the memory of the electronic device. After the shooting operation is triggered, the key frame data corresponding to the seventh un-coded video data and key frame data corresponding to eighth un-coded video data are encoded together into the recorded video in the target image after the eighth un-coded video data of the second duration is obtained, encoded into the key frame data and stored into the memory.

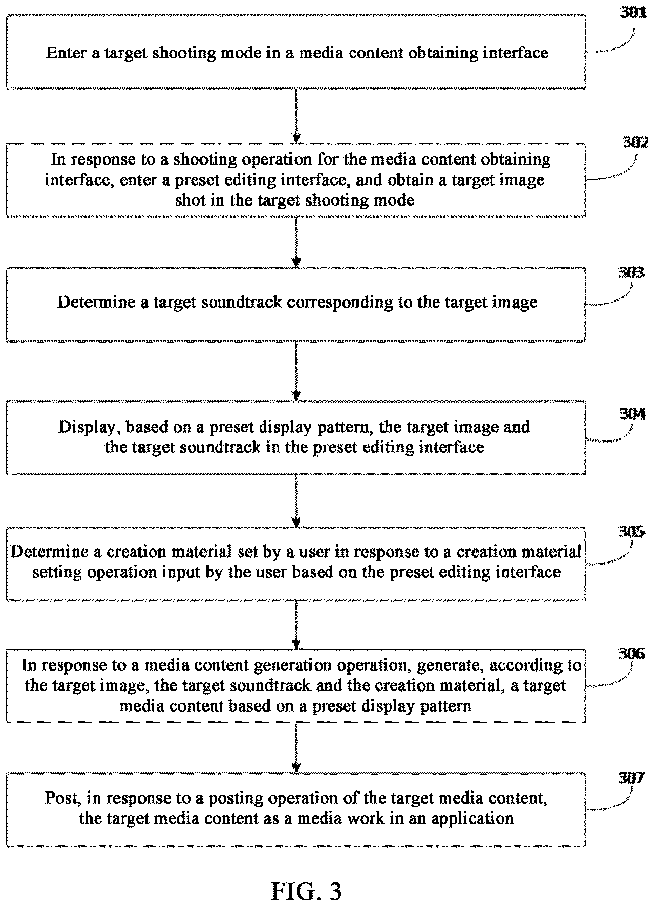

FIG. 3 is a schematic flow diagram of a method for posting a media content according to an example of the disclosure. The example of the disclosure is optimized based on each optional solution in the above embodiments. Specifically, the method includes:
Step 301, a target shooting mode is entered in a media content obtaining interface.

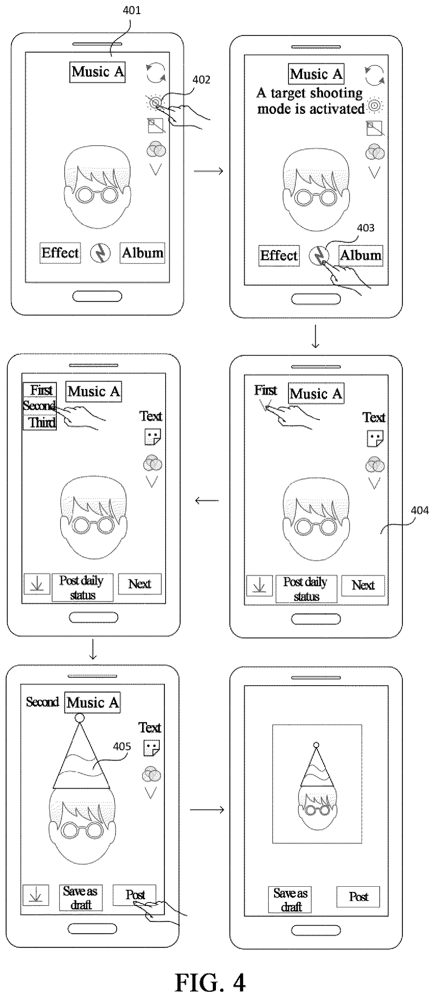

FIG. 4 is a schematic diagram of interface interaction according to an example of the disclosure. A media content obtaining interface 401 displays a target shooting control 402, and is currently in a deactivated state. If a user clicks the target shooting control 402, a target shooting mode is entered, a display state of the target shooting control 402 is changed immediately, and prompt information, such as "a target shooting mode is activated ", may be displayed on the media content obtaining interface, and may automatically disappear after the prompt information is displayed for duration to some extent, such as 2 seconds.

Optionally, the user may perform pre-editing processing such as selection of target audio, setting of creation material such as effects and selection of filters in the media content obtaining interface, and may further select to activate a shooting mode compatible with the target shooting mode, such as a dual shooting mode.

Step 302, in response to a shooting operation for the media content obtaining interface, a preset editing interface is entered, and a target image shot in the target shooting mode is obtained.

Illustratively, after the target shooting mode is entered, video data recorded in real time is cached to obtain newly added cached video data, and historical cached video data satisfying a preset deletion condition is deleted; a preset editing interface is entered and recorded video data of second preset duration continues to be recorded in response to determining that the shooting operation is triggered; and the target image is generated according to the current cached video data and the recorded video data. As shown in FIG. 4, when the user clicks a shutter control 403, the preset editing interface 404 may be entered.

Step 303, a target soundtrack corresponding to the target image is determined.

Illustratively, if the user has determined that the target soundtrack is music A in the media content obtaining interface 401, the target soundtrack is still the music A after the preset editing interface 404 is entered. The user may change the target soundtrack in the preset editing interface 404, and change, for example, the target soundtrack to music B.

Step 304, the target image and the target soundtrack are displayed in the preset editing interface based on a preset display pattern.

Illustratively, after the preset editing interface is entered, the target image and the target soundtrack may be displayed in a default display mode, such as a first display mode. The user may input a display pattern switching operation in the preset editing interface, to view the target image and target audio in different display patterns.

As shown in FIG. 4, the user may click a pull-down button of the first display mode to display more display modes, and to display second and third, for example. After the user clicks "second", the display mode is switched to a second display mode, and a preset display pattern corresponding to the first display mode is switched to a preset display pattern corresponding to the second display mode in the preset editing interface.

Step 305, creation material set by a user is determined in response to a creation material setting operation input by the user based on the preset editing interface.

For example, the user may add stickers or effects into the preset editing interface. If the effects have been added into the media content obtaining interface, the user may change the effects.

As shown in FIG. 4, the user may add a birthday hat sticker 405 into the preset editing interface.

Step 306, in response to a media content generation operation, a target media content is generated according to the target image, the target soundtrack and the creation material based on a preset display pattern.

Illustratively, when a plurality of preset display patterns are included, the generated target media content may include media contents corresponding to the plurality of preset display patterns. Thus, switching of the preset display patterns may be supported when the target media contents are displayed. As shown in FIG. 4, the media content generation operation may be, for example, that the user clicks a "next" control in the preset editing interface to further generate the target media content.

Step 307, in response to a posting operation of the target media content, the target media content is posted as a media work in an application.

As shown in FIG. 4, after the target media content is generated, further operations such as saving as a draft or posting may be performed. If the user clicks "post", the target media content is posted as a media work in the application.

According to the method for posting a media content according to the example of the disclosure, the target shooting control is added into the media content obtaining interface, such that the user activates the target shooting mode, and the shooting operation is triggered. The preset editing interface is entered, and the target image shot in the target shooting mode is obtained. After the target soundtrack corresponding to the target image is determined, the target image and the target soundtrack can be displayed in the preset editing interface based on the preset display pattern, the display modes can be switched, and the creation material such as the sticker can be added. Finally, the target media content can be generated according to the target image, the target soundtrack and the creation material and posted. By using the above technical solution, a creation way of the media content can be enriched, thereby providing more free creation space for the user. An information amount in the media work can be increased, thereby enhancing media work based interaction between users, and improving user experience.

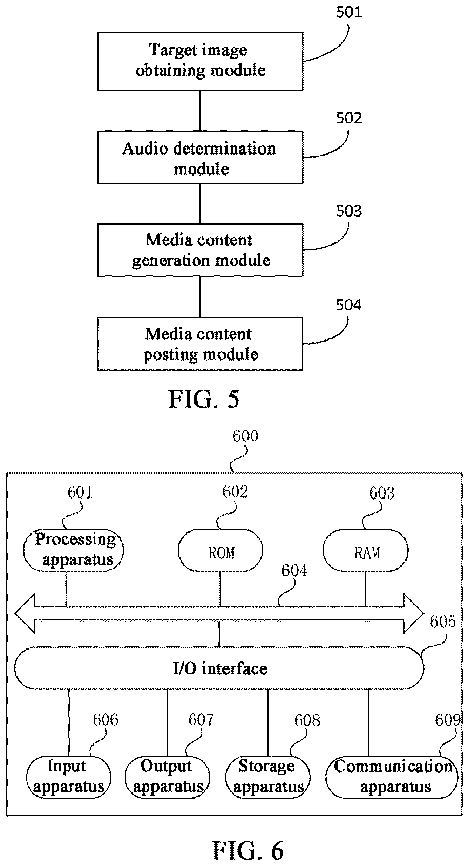

FIG. 5 is a schematic structural diagram of an apparatus for posting a media content according to an example of the disclosure. As shown in FIG. 5, in an application, the apparatus includes:
a target image obtaining module 501, configured to obtain, in response to a shooting operation for a media content obtaining interface, a target image shot in a target shooting mode, where the target image includes a cover image and a recorded video between a first moment before a trigger moment of the shooting operation and a second moment after the trigger moment;
an audio determination module 502, configured to determine target audio corresponding to the target image;
a media content generation module 503, configured to generate a target media content according to the target image and the target audio; and
a media content posting module 504, configured to post, in response to a posting operation of the target media content, the target media content as a media work in the application.

According to the apparatus for posting a media content according to the example of the disclosure, the media content for posting can be generated according to the target image and the target audio and posted. Thus, a creation way of the media content and a content form in the media work are enriched, media work based interaction between users is enhanced, and user experience is improved.

Optionally, the shooting operation only acts on the trigger moment, duration between the first moment and the trigger moment is first duration, duration between the second moment and the trigger moment is second duration, and at least one of the first duration and the second duration is not zero.

Optionally, the target audio includes a target soundtrack, and the media content obtaining interface includes a soundtrack selection control, wherein the soundtrack selection control is configured to select the target soundtrack.

Optionally, the media content generation module includes:
a display unit, configured to display, based on a preset display pattern, the target image and the target audio in a preset editing interface, and
a generation unit, configured to generate, according to the target image and the target audio, the target media content based on the preset display pattern.

Optionally, the apparatus further includes:
a display mode determination module, configured to determine a current display mode in response to a display mode switching operation input based on the preset editing interface, where the display mode is configured to determine the preset display pattern, and different display modes correspond to different media types of the target media content.

Optionally, the preset display pattern is determined according to a display mode and audio duration of the target audio, to completely display the recorded video and/or the cover image in a process of playing all or part of the target audio.

Optionally, the display mode includes a first display mode. The first display mode is configured to display the recorded video and the cover image.

Optionally, the display unit is specifically configured to implement at least one of the following:
the recorded video is completely played in the preset editing interface, and then the target audio is completely played and then muted, or the target audio is looped in a process of displaying the cover image for first preset duration under the condition that the audio duration is less than target image duration in the first display mode, where the target image duration includes the sum of video duration of the recorded video and the first preset duration; and
the recorded video is completely played, and then the cover image continues to be displayed until the target audio is played in a process of playing the target audio in the preset editing interface under the condition that the audio duration is greater than the target image duration in the first display mode, where the target image duration includes the sum of the video duration of the recorded video and the first preset duration.

Optionally, the display mode includes a second display mode, and the second display mode is configured to display the recorded video.

The display unit is specifically configured to implement at least one of the following:
the target audio is completely played and then muted, or the target audio is looped in a process of playing the recorded video in each round in the preset editing interface under the condition that the audio duration is less than video duration of the recorded video in the second display mode; and
the recorded video is completely played for the target number of rounds in a process of playing the target audio of target duration in the preset editing interface under the condition that the audio duration is greater than the video duration of the recorded video in the second display mode, wherein the target number of rounds is determined according to a rounded quotient of the audio duration and the video duration, and the target duration is determined according to a product of the video duration and the target number of rounds.

Optionally, the display mode includes a third display mode, wherein the third display mode is configured to display the cover image.

Optionally, the display unit is specifically configured to display the cover image in a process of completely playing the target audio in the preset editing interface in the third display mode.

Optionally, the apparatus further includes: a material determination module, configured to determine creation material set by a user; and
the media content posting module is specifically configured to generate the target media content according to the target image, the target audio and the creation material.

Optionally, the material determination module is specifically configured to determine the creation material set by the user in response to a creation material setting operation input by the user based on the media content obtaining interface of the target image and/or based on a preset editing interface.

Optionally, the apparatus further includes: an association period determination module, configured to determine an association period between the creation material set by the user and the target image, where the association period is configured to indicate time at which the creation material appears in the target image.

Optionally, the apparatus further includes:
a content display module, configured to display, based on a first preset display pattern, the target media content in a target interface after the target media content is generated according to the target image and the target audio; and
a pattern switching module, configured to switch, in response to a display pattern switching operation, from displaying the target media content based on the first preset display pattern to displaying the target media content based on a second preset display pattern in the target interface.

Optionally, first duration between the first moment and the trigger moment and/or second duration between the second moment and the trigger moment are/is determined according to a setting of a user.

Optionally, the apparatus further includes:
a device type determination module, configured to determine a device type of a local device in response to a saving operation for a posted target media content; and
a saving module, configured to save the posted target media content as at least one of the target image, the recorded video and the cover image according to the device type.

Optionally, the apparatus further includes:
an image posting module, configured to generate, according to the cover image, the media work in the application for posting under the condition of determining that the recorded video is not successfully obtained in response to a preset posting operation of a user in a process of obtaining a target image shot in a target shooting mode.

Optionally, the apparatus further includes:
a cache processing module, configured to cache, in response to determining that a user enables the target shooting mode, video data recorded in real time to obtain newly added cached video data, and delete historical cached video data satisfying a preset deletion condition;
a video recording module, configured to continues to record recorded video data of second preset duration in response to determining that the shooting operation is triggered; and
a photo generation module, configured to generate the target image according to the current cached video data and the recorded video data.

Optionally, the historical cached video data satisfying the preset deletion condition is deleted as follows: the historical cached video data satisfying the preset deletion condition is deleted in a unit of a frame under the condition that the cached video data is un-coded video data; and/or the historical cached video data satisfying the preset deletion condition is deleted in a unit of an encoded file under the condition that the cached video data is encoded video data.

The apparatus for posting a media content according to the example of the disclosure may execute the method for posting a media content according to any example of the disclosure, and has corresponding functional modules and beneficial effects upon execution of the method.

It is worth noting that a plurality of units and modules included in the apparatus above are merely divided according to a functional logic, but are not limited to the above division, as long as the corresponding functions can be achieved. In addition, particular names of each functional unit are merely for the convenience of mutual distinguishing and are not used to limit the scope of protection of the embodiments of the disclosure.

FIG. 6 is a schematic structural diagram of an electronic device according to an example of the disclosure. Reference is made to FIG. 6 showing a schematic structural diagram of an electronic device (such as a terminal device or server in FIG. 6) 600 suitable for implementing the embodiments of the disclosure below. The terminal device in the example of the disclosure may include, but not limited to, a mobile terminal such as a mobile phone, a notebook computer, a digital broadcast receiver, a personal digital assistant (PDA), a portable android device (PAD), a portable multimedia player (PMP) and a vehicle-mounted terminal (such as a vehicle-mounted navigation terminal), and a fixed terminal such as a digital television (TV) and a desktop computer. The electronic device shown in FIG. 6 is merely an example and should not bring any limitation to functions and the scope of use of the example of the disclosure.

As shown in FIG. 6, the electronic device 600 may include a processing apparatus (such as a central processing unit and a graphics processing unit) 601 that may execute various suitable actions and processes according to programs stored in a read only memory (ROM) 602 or programs loaded from a storage apparatus 608 into a random access memory (RAM) 603. Various programs and data required for the operation of the electronic device 600 are further stored in the RAM 603. The processing apparatus 601, the ROM 602, and the RAM 603 are connected to each other by means of a bus 604. An input/output (I/O) interface 605 is also connected to the bus 604.

Usually, the following apparatuses may be connected to the I/O interface 605: an input apparatus 606 including a touch screen, a touchpad, a keyboard, a mouse, a camera, a microphone, an accelerometer and a gyroscope, for example; an output apparatus 607 including a liquid crystal display (LCD), a speaker and a vibrator, for example; the storage apparatus 608 including a magnetic tape and a hard drive, for example; and a communication apparatus 609. The communication apparatus 609 may allow the electronic device 600 to perform wireless or wired communication with other devices to exchange data. Although FIG. 6 shows the electronic device 600 having various apparatuses, it should be understood that not all e shown apparatuses are required to be implemented or provided. More or less apparatuses may be alternatively implemented or provided.

Specifically, according to the example of the disclosure, the process described above with reference to the flow diagram may be implemented as a computer software program. For example, the example of the disclosure includes a computer program product including a computer program carried on a non-transitory computer-readable medium. The computer program includes program codes configured to execute the method shown in the flow diagram. In such an example, the computer program may be downloaded and installed from a network via the communication apparatus 609, or installed from the storage apparatus 608, or installed from the ROM 602. When the computer program is executed by the processing apparatus 601, the above functions defined in the method of the example of the disclosure are executed.

The names of messages or information exchanged between a plurality of apparatuses in the embodiments of the disclosure are merely for illustrative purposes, and are not intended to limit the scope of these messages or information.

The electronic device provided in the example of the disclosure belongs to the same inventive concept as the method for posting a media content according to the above example. The technical details not described in detail in the example can refer to the above example, and the example has the same beneficial effects as the above example.

A computer storage medium is provided in an example of the disclosure. The computer storage medium stores a computer program, where the program implements the method for posting a media content according to the above example when executed by a processor.

It should be noted that the computer storage medium of the disclosure may be a computer-readable signal medium, a computer-readable storage medium, or any combination of the computer-readable signal medium and the computer-readable storage medium. The computer-readable storage medium may be, for example, but not limited to, an electronic, magnetic, optical, electromagnetic, infrared, or semiconductor system, apparatus, or device, or any suitable combination of the above. More specific embodiments of the computer-readable storage medium may include, but not limited to: an electrically connected and portable computer disk having one or more wires, a hard drive, an RAM, an ROM, an erasable programmable read-only memory (EPROM or a flash memory), an optical fiber, a portable compact disk read-only memory (CD-ROM), an optical storage device, a magnetic storage device, or any suitable combination of the above. In the disclosure, the computer-readable storage medium may be any tangible medium that includes or stores a program that may be used by an instruction execution system, apparatus, or device or in combination with the instruction execution system, apparatus, or device. In the disclosure, the computer-readable signal medium may include a data signal propagating in a baseband or as part of a carrier wave, which carries computer-readable program codes. Such a data signal propagating may take various forms, including, but not limited to, an electromagnetic signal, an optical signal, or any suitable combination of the above. The computer-readable signal medium may further be any computer-readable medium apart from the computer-readable storage medium, and the computer-readable signal medium may send, propagate, or transmit programs used by the instruction execution system, apparatus, or device or in combination with the instruction execution system, apparatus, or device. Program codes included on the computer-readable medium may be transmitted by using any suitable medium, including, but not limited to, wire, optical cable, radio frequency (RF), etc., or any suitable combination of the above.

In some embodiments, a client and a server may communicate by utilizing any currently known or future developed network protocol such as a hypertext transfer protocol (HTTP), and may interconnect with digital data communication (for example, communication network) in any form or medium. An example of the communication network includes a local area network ("LAN"), a wide area network ("WAN"), an internet work (for example, the Internet), an end-to-end network (such as an ad hoc end-to-end network), as well as any currently known or future developed network.

The above computer storage medium may be included in the above electronic device, or exist separately without being assembled into the electronic device.

The above computer storage medium carries one or more programs. When executed by the electronic device, the one or more programs cause the electronic device to execute the following steps: a target image shot in a target shooting mode is obtained in response to a shooting operation for a media content obtaining interface, where the target image includes a cover image and a recorded video between a first moment before a trigger moment of the shooting operation and a second moment after the trigger moment; target audio corresponding to the target image is determined; a target media content is generated according to the target image and the target audio; and in response to a posting operation of the target media content, the target media content is posted as a media work in the application.

Computer program codes configured to execute operations of the disclosure may be written in one or more programming languages or a combination of the programming languages. The above programming languages include, but not limited to, object-oriented programming languages such as Java, Smalltalk and C++, and further include conventional procedural programming languages such as "C" programming language or similar programming languages. The program codes may be executed entirely on a user computer, executed partially on the user computer, executed as a stand-alone software package, executed partially on the user computer and partially on a remote computer, or executed entirely on the remote computer or a server. Where the remote computer is involved, the remote computer may be connected to the user computer through any kind of network, including the LAN or the WAN, or may be connected to an external computer (for example, the remote computer is connected by means of the Internet by an Internet service provider).

Flow diagrams and block diagrams in the accompanying drawings illustrate system structures, functions and operations, which may be implemented according to systems, methods and computer program products in various embodiments of the disclosure. In this regard, each block in the flow diagrams or the block diagrams may represent a module, a program segment, or part of codes, which may include one or more executable instructions configured to implement logical functions specified. It should also be noted that in some alternative implementations, functions noted in the blocks may also occur in sequences different from those in the accompanying drawings. For example, the functions represented by two continuous blocks may be actually implemented basically in parallel, and sometimes executed in reverse sequences, which depends on the involved functions. It should also be noted that each block in the block diagrams and/or the flow diagrams, and combinations of the blocks in the flow diagrams and/or the block diagrams, may be implemented by using dedicated hardware-based systems that implement the specified functions or operations, or may be implemented by using combinations of dedicated hardware and computer instructions.

The units described in the embodiments of the disclosure may be implemented in software or hardware. The names of the modules do not constitute limitations to the modules themselves in some cases. For example, an audio determination module unit may be further described as a "module for determining an target audio corresponding to the target image".

The above functions herein may be at least partially executed by one or more hardware logic components. For example, non-restrictively, demonstration types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the disclosure, a machine-readable medium may be a tangible medium that may include or store a program for use by the instruction execution system, apparatus, or device or in combination with the instruction execution system, apparatus, or device. The machine-readable medium may be a computer-readable signal medium or a computer-readable storage medium. The machine-readable medium may include, but not limited to, an electronic, magnetic, optical, electromagnetic, infrared, or semiconductor system, apparatus, or device, or any suitable combination of the above. More specific embodiments of the machine-readable storage medium may include an electrically connected and portable computer diskette based on one or more wires, a hard disk, a RAM, a ROM, an EPROM or a flash memory, an optical fiber, a portable CD-ROM, an optical storage device, a magnetic storage device, or any suitable combination of the above.

According to one or more embodiments of the disclosure, a method for posting a media content is provided. The method includes:
a target image shot in a target shooting mode is obtained in response to a shooting operation for a media content obtaining interface, where the target image includes a cover image and a recorded video between a first moment before a trigger moment of the shooting operation and a second moment after the trigger moment;
target audio corresponding to the target image is determined;
a target media content is generated according to the target image and the target audio; and
in response to a posting operation of the target media content, the target media content is posted as a media work in the application.

According to one or more embodiments of the disclosure, the shooting operation only acts on the trigger moment, duration between the first moment and the trigger moment is first duration, duration between the second moment and the trigger moment is second duration, and at least one of the first duration and the second duration is not zero.

According to one or more embodiments of the disclosure, the target audio includes a target soundtrack, and the media content obtaining interface includes a soundtrack selection control, where the soundtrack selection control is configured to select the target soundtrack.

According to one or more embodiments of the disclosure, the step that a target media content is generated according to the target image and the target audio includes:
the target image and the target audio are displayed in a preset editing interface based on a preset display pattern, and
the target media content is generated according to the target image and the target audio based on the preset display pattern.

According to one or more embodiments of the disclosure, the method further includes:
a current display mode is determined in response to a display mode switching operation input based on the preset editing interface, where the display mode is configured to determine the preset display pattern, and different display modes correspond to different media types of the target media content.

According to one or more embodiments of the disclosure, the preset display pattern is determined according to a display mode and audio duration of the target audio, so as to completely display the recorded video and/or the cover image in a process of playing all or part of the target audio.

According to one or more embodiments of the disclosure, the display mode includes a first display mode, where the first display mode is configured to display the recorded video and the cover image.

According to one or more embodiments of the disclosure, the step that the target image and the target audio are displayed in a preset editing interface based on a preset display pattern includes at least one of the following:
the recorded video is completely played in the preset editing interface, and then the target audio is completely played and then muted, or the target audio is looped in a process of displaying the cover image for first preset duration under the condition that the audio duration is less than target image duration in the first display mode, where the target image duration includes the sum of video duration of the recorded video and the first preset duration; and
the recorded video is completely played, and then the cover image continues to be displayed until the target audio is played in a process of playing the target audio in the preset editing interface under the condition that the audio duration is greater than the target image duration in the first display mode, where the target image duration includes the sum of the video duration of the recorded video and the first preset duration.

According to one or more embodiments of the disclosure, the display mode includes a second display mode, where the second display mode is configured to display the recorded video.

According to one or more embodiments of the disclosure, the step that the target image and the target audio are displayed in a preset editing interface based on a preset display pattern includes at least one of the following:
the target audio is completely played and then muted, or the target audio is looped in a process of playing the recorded video in each round in the preset editing interface under the condition that the audio duration is less than video duration of the recorded video in the second display mode; and
the recorded video is completely played for the target number of rounds in a process of playing the target audio of target duration in the preset editing interface under the condition that the audio duration is greater than the video duration of the recorded video in the second display mode, where the target number of rounds is determined according to a rounded quotient of the audio duration and the video duration, and the target duration is determined according to a product of the video duration and the target number of rounds.

According to one or more embodiments of the disclosure, the display mode includes a third display mode, where the third display mode is configured to display the cover image.

According to one or more embodiments of the disclosure, the step that the target image and the target audio are displayed in a preset editing interface based on a preset display pattern includes:
the cover image is displayed in a process of completely playing the target audio in the preset editing interface in the third display mode.

According to one or more embodiments of the disclosure, the method further includes:
creation material set by a user is determined; and
the step that the target media content is generated according to the target image and the target audio includes:
the target media content is generated according to the target image, the target audio and the creation material.

According to one or more embodiments of the disclosure, the step that creation material set by a user is determined includes:
the creation material set by the user is determined in response to a creation material setting operation input by the user based on the media content obtaining interface of the target image and/or based on a preset editing interface.

According to one or more embodiments of the disclosure, the method further includes:
an association period between the creation material set by the user and the target image is determined, where the association period is configured to indicate time at which the creation material appears in the target image.

According to one or more embodiments of the disclosure, after the target media content is generated according to the target image and the target audio, the method includes:
the target media content is displayed in a target interface based on a first preset display pattern; and
switching is performed from displaying the target media content based on the first preset display pattern to displaying the target media content based on a second preset display pattern in the target interface in response to a display pattern switching operation.

According to one or more embodiments of the disclosure, first duration between the first moment and the trigger moment and/or second duration between the second moment and the trigger moment are/is determined according to a setting of a user.

According to one or more embodiments of the disclosure, the method further includes:
a device type of a local device is determined in response to a saving operation for a posted target media content; and
the posted target media content is saved as at least one of the target image, the recorded video and the cover image according to the device type.

According to one or more embodiments of the disclosure, in a process of obtaining a target image shot in a target shooting mode, the method further includes:
in response to a preset posting operation of a user, the media work in the application is generated according to the cover image for posting under the condition of determining that the recorded video is not successfully obtained.

According to one or more embodiments of the disclosure, the method further includes:
in response to determining that a user enables the target shooting mode, video data recorded in real time is cached to obtain newly added cached video data, and historical cached video data satisfying a preset deletion condition is deleted;
recorded video data of second preset duration continues to be recorded in response to determining that the shooting operation is triggered; and
the target image is generated according to the current cached video data and the recorded video data.

According to one or more embodiments of the disclosure, the step that historical cached video data satisfying a preset deletion condition is deleted includes:
the historical cached video data satisfying the preset deletion condition is deleted in a unit of a frame under the condition that the cached video data is un-coded video data; and/or
the historical cached video data satisfying the preset deletion condition is deleted in a unit of an encoded file under the condition that the cached video data is encoded video data.

According to one or more embodiments of the disclosure, an apparatus for posting a media content is provided. The apparatus includes:
a target image obtaining module, configured to obtain, in response to a shooting operation for a media content obtaining interface, a target image shot in a target shooting mode, where the target image includes a cover image and a recorded video between a first moment before a trigger moment of the shooting operation and a second moment after the trigger moment;
an audio determination module, configured to determine target audio corresponding to the target image;
a media content generation module, configured to generate a target media content according to the target image and the target audio; and
a media content posting module, configured to post, in response to a posting operation of the target media content, the target media content as a media work in the application.

According to one or more embodiments of the disclosure, an electronic device is provided. The electronic device includes:
one or more processors; and
a storage apparatus, configured to store one or more programs, where
the one or more processors implement the method for posting a media content according to the example of the disclosure when the one or more programs are executed by the one or more processors.

According to one or more embodiments of the disclosure, a storage medium including a computer-executable instruction is provided. The computer-executable instruction is configured to execute the method for posting a media content according to the example of the disclosure when executed by a computer processor.

What are described above are merely for illustration of the preferred embodiments of the disclosure and the technical principles used. It should be understood by those skilled in the art that the disclosed scope involved in the disclosure is not limited to the technical solution formed by a specific combination of the technical features described above, and should also cover other technical solutions formed by any combination of the technical features described above or equivalent features of the technical features without departing from the disclosed concept described above, for example, the technical solution formed by replacing the above-mentioned features with the technical features having similar functions disclosed in (but not limited to) the disclosure.

Furthermore, although each operation is described in a specific order, this should not be understood as requiring the operations to be executed in the specific order shown or in a sequential order. In a certain environment, multitasking and parallel processing may be advantageous. Similarly, although several specific implementation details are included in the above discussion, these details should not be interpreted as limiting the scope of the disclosure. Some features described in the context of a single example can further be implemented in a single example in a combined mode. On the contrary, various features described in the context of a single example can also be implemented in multiple embodiments separately or in an any suitable subcombination mode.

Although the subject matter has been described in language specific to structural features and/or method logical actions, it should be understood that the subject matter defined in the appended claims may not necessarily be limited to the specific features or actions described above. On the contrary, the specific features and actions described above are merely exemplary forms to implement the claims.

## Claims

1. A method for posting a media content, wherein in an application, the method comprises:
obtaining, in response to a shooting operation for a media content obtaining interface, a target image shot in a target shooting mode, wherein the target image comprises a cover image and a recorded video between a first moment before a trigger moment of the shooting operation and a second moment after the trigger moment;
determining target audio corresponding to the target image;
generating a target media content according to the target image and the target audio; and
posting, in response to a posting operation of the target media content, the target media content as a media work in the application.

2. The method according to claim 1, wherein the shooting operation only acts on the trigger moment, duration between the first moment and the trigger moment is first duration, duration between the second moment and the trigger moment is second duration, and at least one of the first duration and the second duration is not zero.

3. The method according to claim 1, wherein the target audio comprises a target soundtrack, and the media content obtaining interface comprises a soundtrack selection control, wherein the soundtrack selection control is configured to select the target soundtrack.

4. The method according to claim 1, wherein generating a target media content according to the target image and the target audio comprises:
displaying, based on a preset display pattern, the target image and the target audio in a preset editing interface to generate, according to the target image and the target audio, the target media content based on the preset display pattern.

5. The method according to claim 4, further comprising:
determining a current display mode in response to a display mode switching operation input based on the preset editing interface, wherein the display mode is configured to determine the preset display pattern, and different display modes correspond to different media types of the target media content.

6. The method according to claim 4, wherein the preset display pattern is determined according to a display mode and audio duration of the target audio, to completely display the recorded video and/or the cover image in a process of playing all or part of the target audio.

7. The method according to claim 6, wherein the display mode comprises a first display mode, and the first display mode is configured to display the recorded video and the cover image.

8. The method according to claim 7, wherein displaying, based on a preset display pattern, the target image and the target audio in a preset editing interface comprises at least one of the following:
completely playing the recorded video in the preset editing interface, and then completely playing the target audio and then muting the audio or looping the target audio in a process of displaying the cover image for first preset duration in response to the audio duration being less than target image duration in the first display mode, wherein the target image duration comprises the sum of video duration of the recorded video and the first preset duration; and
completely playing the recorded video, and then continuing to display the cover image until the target audio is played in a process of playing the target audio in the preset editing interface in response to the audio duration being greater than the target image duration in the first display mode, wherein the target image duration comprises the sum of the video duration of the recorded video and the first preset duration.

9. The method according to claim 6, wherein the display mode comprises a second display mode, and the second display mode is configured to display the recorded video.

10. The method according to claim 9, wherein displaying, based on a preset display pattern, the target image and the target audio in a preset editing interface comprises at least one of the following:
completely playing the target audio and then muting the audio or looping the target audio in a process of playing the recorded video in each round in the preset editing interface in response to the audio duration being less than video duration of the recorded video in the second display mode; and
completely playing the recorded video for the target number of rounds in a process of playing the target audio of target duration in the preset editing interface in response to the audio duration being greater than the video duration of the recorded video in the second display mode, wherein the target number of rounds is determined according to a rounded quotient of the audio duration and the video duration, and the target duration is determined according to a product of the video duration and the target number of rounds.

11. The method according to claim 6, wherein the display mode comprises a third display mode, and the third display mode is configured to display the cover image.

12. The method according to claim 11, wherein displaying, based on a preset display pattern, the target image and the target audio in a preset editing interface comprises:
displaying the cover image in a process of completely playing the target audio in the preset editing interface in the third display mode.

13. The method according to claim 1, further comprising:
determining creation material set by a user; and
generating the target media content according to the target image and the target audio comprises:
generating the target media content according to the target image, the target audio and the creation material.

14. The method according to claim 13, wherein determining creation material set by a user comprises:
determining the creation material set by the user in response to a creation material setting operation input by the user based on the media content obtaining interface of the target image and/or based on a preset editing interface.

15. The method according to claim 13, further comprising:
determining an association period between the creation material set by the user and the target image, wherein the association period is configured to indicate time at which the creation material appears in the target image.

16. The method according to claim 1, wherein after generating a target media content according to the target image and the target audio, the method comprises:
displaying, based on a first preset display pattern, the target media content in a target interface; and
switching, in response to a display pattern switching operation, from displaying the target media content based on the first preset display pattern to displaying the target media content based on a second preset display pattern in the target interface.

17. The method according to claim 1, wherein the first duration between the first moment and the trigger moment and/or the second duration between the second moment and the trigger moment are determined according to a setting of a user.

18. The method according to claim 1, further comprising:
determining a device type of a local device in response to a saving operation for a posted target media content; and
saving the posted target media content as at least one of the target image, the recorded video and the cover image according to the device type.

19. The method according to claim 1, wherein in a process of obtaining a target image shot in a target shooting mode, the method further comprises:
in response to a preset posting operation of a user, generating, according to the cover image, the media work in the application for posting under a condition of determining that the recorded video is not successfully obtained.

20. The method according to claim 1, further comprising:
caching, in response to determining that a user enables the target shooting mode, video data recorded in real time to obtain newly added cached video data, and deleting historical cached video data satisfying a preset deletion condition;
continuing to record recorded video data of second preset duration in response to determining that the shooting operation is triggered; and
generating the target image according to the current cached video data and the recorded video data.

21. The method according to claim 20, wherein deleting historical cached video data satisfying a preset deletion condition comprises:
deleting the historical cached video data satisfying the preset deletion condition in a unit of a frame in response to the cached video data being un-coded video data; and/or
deleting the historical cached video data satisfying the preset deletion condition in a unit of an encoded file in response to the cached video data being encoded video data.

22. An apparatus for posting media content, wherein in an application, the apparatus comprises:
a target image obtaining module, configured to obtain, in response to a shooting operation for a media content obtaining interface, a target image shot in a target shooting mode, wherein the target image comprises a cover image and a recorded video between a first moment before a trigger moment of the shooting operation and a second moment after the trigger moment;
an audio determination module, configured to determine target audio corresponding to the target image;
a media content generation module, configured to generate a target media content according to the target image and the target audio; and
a media content posting module, configured to post, in response to a posting operation of the target media content, the target media content as a media work in the application.

23. The apparatus according to claim 22, comprising: a module configured to execute the method according to any of claims 2-21.

24. An electronic device, comprising:
one or more processors; and
a storage apparatus, configured to store one or more programs, wherein
when the one or more programs are executed by the one or more processors, causing the one or more processors to perform the method for posting a media content according to any of claims 1-21.

25. A storage medium comprising computer-executable instructions, when the computer-executable instruction performed by a computer processor, causing the computer processor to perform the method for posting a media content according to any of claims 1-21.
